# EUROPÄISCHE PATENTSCHRIFT

(11) **EP 1 261 507 B1**
(45) Veröffentlichungstag und Bekanntmachung des Hinweises auf die Patenterteilung: **06.05.2004**
(21) Anmeldenummer: 01919206.1
(22) Anmeldetag: 12.03.2001
(51) Int. Cl.: B60Q 5/00, H01H 1/18

(54) **LENKRAD FÜR KRAFTFAHRZEUGE MIT EINER SCHALTEINRICHTUNG ZUM BETÄTIGEN EINER ELEKTRISCHEN FUNKTIONSGRUPPE EINES KRAFTFAHRZEUGS**
STEERING WHEEL FOR MOTOR VEHICLES, SAID STEERING WHEEL COMPRISING A SWITCHING DEVICE FOR ACTUATING AN ELECTRIC FUNCTIONAL GROUP OF A MOTOR VEHICLE
VOLANT POUR VEHICULE AUTOMOBILE POURVU D'UN DISPOSITIF DE COMMUTATION POUR ACTIONNER UN GROUPE FONCTIONNEL ELECTRIQUE DU VEHICULE AUTOMOBILE

(30) Priorität: 10.03.2000 DE 20004953 U
(43) Veröffentlichungstag der Anmeldung: 04.12.2002
(73) Patentinhaber: Takata-Petri AG, 63743 Aschaffenburg (DE)
(72) Erfinder: BONN, Helmut, 63808 Haibach (DE); BURDACK, Harald, 63808 Haibach (DE)
(74) Vertreter: Baumgärtel, Gunnar, Dr.
(86) Internationale Anmeldenummer: PCT/DE2001/001024
(87) Internationale Veröffentlichungsnummer: WO 2001/066383

(56) Entgegenhaltungen:
- DE-A- 3 437 110
- DE-C- 667 850
- DE-C- 19 834 375
- US-A- 3 912 895
- US-A- 5 338 906
- PATENT ABSTRACTS OF JAPAN vol. 1998, no. 01, 30. Januar 1998 (1998-01-30) & JP 09 231868 A (ASAHI DENSO KK), 5. September 1997 (1997-09-05)
- PATENT ABSTRACTS OF JAPAN vol. 1999, no. 08, 30. Juni 1999 (1999-06-30) & JP 11 067003 A (ALPS ELECTRIC CO LTD), 9. März 1999 (1999-03-09)

## Beschreibung

Die Erfindung betrifft ein Lenkrad für Kraftfahrzeuge mit einer Schalteinrichtung zum Betätigen einer elektrischen Funktionsgruppe eines Kraftfahrzeugs nach dem Oberbegriff des Patentanspruchs 1, siehe US-A-5 338 906.

Es ist üblich, zur Auslösung elektrischer Funktionsgruppen eines Kraftfahrzeuges, insbesondere zur Auslösung eines Signalhornes, eine oder mehrere Schalteinrichtungen zu verwenden, die sich durch Ausüben einer Kraft auf einen zentralen Bereich des Lenkrades betätigen lassen und die jeweils zwei zueinander bewegliche elektrische Kontaktelemente (z.B. in Form von Kontaktelementen aus Silber) umfassen, die sich miteinander in Kontakt bringen lassen, um die entsprechende elektrische Funktionsgruppe auszulösen.

Bei einer derartigen Schalteinrichtung besteht das Problem, daß die Kontaktelemente mit der Zeit verschmutzen oder von einer Oxidschicht überzogen werden, was die Funktionstüchtigkeit der Schalteinrichtung beeinträchtigt. Dies gilt insbesondere dann, wenn mittels der Schalteinrichtung ein Relais angesteuert werden soll oder ein Steuersignal an eine Elektronikeinrichtung abgegeben werden soll, woraufhin die Signalhorneinrichtung ausgelöst wird. In diesen Fällen fließen über die beiden Kontaktelemente der Schalteinrichtung lediglich schwache Ströme mit einer Stromstärke in der Größenordnung von 20 mA bei einer Spannung in der Größenordnung von 5 V bis 12 V. Die Verschmutzung oder Oxidation der Kontaktelemente wirkt sich dann besonders nachteilig aus.

Der Erfindung liegt die Aufgabe zugrunde, ein Lenkrad für Kraftfahrzeuge mit einer Schalteinrichtung zum Betätigen einer elektrischen Funktionsgruppe eines Kraftfahrzeugs der eingangs genannten Art zu schaffen, die sich durch eine erhöhte Funktionssicherheit auszeichnet.

Diese Aufgabe wird erfindungsgemäß durch die Schaffung eines Lenkrades mit den Merkmalen des Patentanspruchs 1 gelöst.

Danach ist vorgesehen, daß mindestens eines der Kontaktelemente der Schalteinrichtung derart federnd gelagert ist, daß es entlang des anderen Kontaktelementes gleitet, nachdem die beiden Kontaktelemente unter der zur Herstellung des elektrischen Kontaktes, d.h. zum Schließen der Schalteinrichtung, aufgebrachten Kraft miteinander in Kontakt gebracht worden sind.

Die beiden Kontaktelemente der Schalteinrichtung werden an zwei zur Herstellung des Kontaktes zueinander beweglichen, tragenden Baugruppen des Lenkrades befestigt.

Das federnd gelagerte Kontaktelement ist dabei über ein elastisches Element mit der zugehörigen tragenden Baugruppe, z.B. dem Kontaktträger verbunden.

Dadurch, daß die beiden Kontaktelemente aufgrund der federnden Lagerung eines Kontaktelementes nach der Herstellung des elektrischen Kontaktes mit ihren in Kontakt befindlichen Kontaktflächen eine Relativbewegung zueinander ausführen, werden die Kontaktelemente von Verschmutzung gereinigt bzw. von einer Oxidschicht befreit. Beim Schließen der Schalteinrichtung erfolgt also automatisch eine Reinigung der Kontakte, indem die eine Kontaktfläche auf der anderen Kontaktfläche gleitet.

Hierbei kann insbesondere vorgesehen sein, daß beim Ausüben einer Kraft auf den hierfür vorgesehenen Betätigungsabschnitt des Lenkrades, z.B. im zentralen Lenkradbereich, die beiden Kontaktelemente entlang einer ersten Richtung aufeinander zu bewegt werden, bis sie miteinander in Kontakt treten und daß nach Herstellung des Kontaktes das federnd gelagerte Kontaktelement entlang einer zweiten Richtung ausweicht und dabei über das andere Kontaktelement gleitet, wobei die zweite Richtung vorzugsweise im wesentlichen senkrecht zu der ersten Richtung verläuft. In diesem Fall erstrecken sich die Kontaktflächen der beiden Kontaktelemente jeweils im wesentlichen senkrecht zu der ersten Richtung, entlang der die beiden Kontakte aufeinander zu bewegbar sind.

Vorteilhaft ist eines der Kontaktelemente an einer Baugruppe des Lenkradskelettes festgelegt und das andere Kontaktelement an einer bezüglich des Lenkradskelettes beweglichen Baugruppe gelagert.

Die bezüglich des Lenkrades bewegliche Baugruppe umfaßt vorzugsweise einen Kontaktträger und ist über ein elastisches Element federnd mit dem Lenkradskelett verbunden.

Durch Ausübung einer Kraft auf den zentralen Lenkradbereich, in dem in der Regel ein Airbagmodul beweglich gelagert ist, wird der mit dem einen Kontaktelement versehene Kontaktträger zu der mit dem anderen Kontaktelement versehenen Lenkradskelettseitigen Baugruppe hinbewegt, so daß die beiden Kontaktelemente miteinander in Kontakt treten.

Das elastische Element kann sowohl einstückig an dem Kontaktelement angeformt sein als auch als ein separates, an dem Kontaktelement befestigtes elastisches Element ausgebildet sein.

Das elastische Element steht vorzugsweise unter Vorspannung, um eine definierte Positionierung des Kontaktelementes und damit auch einen definierten Abstand zu dem anderen Kontaktelement sicherzustellen.

Das elastische Element weist in einer bevorzugten Ausführungsform einen Schenkel auf, der in einem spitzen Winkel zu der Bewegungsrichtung verläuft, entlang der die beiden Kontaktelemente miteinander in Kontakt bringbar sind. Dieser Winkel wird vorzugsweise derart gewählt, daß der Winkel zwischen dem genannten Schenkel des elastischen Elementes und der Kontaktfläche des Kontaktelementes mindestens 45° beträgt. Durch die Wahl des letztgenannten Winkels zwischen dem Schenkel des elastischen Elementes und der Kontaktfläche des zugehörigen Kontaktelementes wird festgelegt, wie weit sich das federnd gelagerte Kontaktelement nach dem Inkontakttreten der beiden Kontaktelemente entlang des anderen Kontaktelementes bewegt, wenn diese Bewegung durch eine definierte Kraft verursacht wird.

An einem Ende des Schenkels des elastischen Elementes wird das zugehörige Kontaktelement befestigt und das andere Ende des Schenkels wird an der entsprechenden tragenden Baugruppe, z.B. dem Kontaktträger, festgelegt. Dabei stützt sich der Schenkel vorzugsweise an einem Stützelement der tragenden Baugruppe ab, wobei diese Baugruppe einerseits einstükkig an dem Schenkel angeformt sein kann oder alternativ eine schiefe Ebene bildet, an der der Schenkel des elastischen Elementes anliegt.

Um die Umsetzung einer Kraft, unter der sich die beiden Kontaktelemente zunächst aufeinander zu bewegen, bis sie miteinander in Kontakt stehen, in eine Bewegung, bei der die Kontaktfläche des einen Kontaktelementes über die Kontaktfläche des anderen Kontaktelementes gleitet, zu erleichtern, ist der Schenkel des elastischen Elementes vorzugsweise mit seinem dem Kontaktelement abgewandten Ende in einer im Querschnitt punktförmigen Lagerstelle gelagert, so daß er sich verschwenken läßt.

Weiterhin können Anschläge vorgesehen sein, die zusammenwirken, um die Bewegung der beiden Kontaktelemente zueinander zu begrenzen und damit auch die Kraft zu begrenzen, die die beiden Kontaktelemente maximal aufeinander ausüben. Hierbei ist der Abstand der beiden Kontaktelemente in Bewegungsrichtung kleiner als der Abstand der beiden Anschläge entlang dieser Richtung; denn die beiden Anschläge müssen zulassen, daß die beiden Kontaktelemente miteinander in Kontakt treten und sich anschließend noch parallel zueinander bewegen, bevor durch ein Aufeinandertreffen der beiden Anschläge eine weitere Bewegung verhindert wird.

Der Kontaktträger besteht vorzugsweise aus einem leitenden Material und ist mit einem Anschlußstecker verbunden, so daß der Kontaktträger auf ein definiertes elektrisches Potential bringbar ist. Hierbei kann der Kontaktträger auch einstückig mit dem Anschlußstecker ausgebildet sein. Der Kontaktträger und der daran zur Minimierung des Übergangswiderstandes einstückig angeformte Anschlußstecker können z.B. aus einem verzinnten Stahl- oder Messingblech bestehen.

Um die Verschmutzung der Kontaktelemente von vornherein möglichst weitgehend zu verhindern, können diese von einer Hülle umgeben sein.

Bei dem nicht federnd gelagerten Kontakt handelt es sich vorzugsweise um einen Kontaktniet, der eine rauhe, z.B. geriffelte Oberfläche (Kontaktfläche) aufweist. Hierdurch wird die Reinigungswirkung verbessert, die auftritt, während sich die eine Kontaktfläche entlang der anderen bewegt. Dies ermöglicht eine Reduzierung des Kontaktdruckes, der von dem federnd gelagerten Kontaktelement auf das andere Kontaktelement ausgeübt werden muß, um eine hinreichende Reinigungswirkung zu erzielen. Hierdurch kann die Größe des zur federnden Lagerung des einen Kontaktelementes dienenden elastischen Elementes (Kontaktfeder) verringert werden.

Das federnd gelagerte Kontaktelement kann vorzugsweise durch ein Kontaktblech gebildet werden, das Versteifungsrippen und/oder Entlastungsschlitze bzw. Bohrungen aufweist, um den Kontaktdruck gezielt zu erhöhen oder zu reduzieren, der auftritt, wenn die beiden Kontaktelemente unter Wirkung einer definierten Kraft miteinander in Kontakt treten.

Weitere Merkmale und Vorteile der Erfindung werden bei der nachfolgenden Beschreibung von Ausführungsbeispielen anhand der Figuren deutlich werden.

Es zeigen:
- Fig. 1 -: eine Draufsicht auf ein Lenkrad, dessen zentraler Lenkradbereich zur Aufnahme eines Airbagmodules dient, welches in Fig. 1 nicht dargestellt ist, um die elektrischen Baugruppen im zentralen Lenkradbereich sichtbar zu machen;
- Fig. 2 -: einen Querschnitt entlang der Linie II - II des Lenkrades aus Fig. 1;
- Fig. 3a -: eine vergrößerte Darstellung eines Ausschnittes aus Fig. 2, die eine elektrische Schalteinrichtung mit zwei zueinander beweglichen Kontaktelementen zeigt;
- Fig. 3b -: die Schalteinrichtung aus Fig. 3a mit in Kontakt befindlichen Kontaktelementen;
- Fig. 3c -: eine perspektivische Darstellung des einen Kontaktelementes aus den Figuren 3a bzw. 3b;
- Figuren 3d, 3e -: eine Weiterbildung der Schalteinrichtung aus den Figuren 3a, 3b;
- Fig. 4a -: eine Abwandlung der Schalteinrichtung aus den Figuren 3a und 3b;
- Fig. 4b -: eine perspektivische Darstellung eines Kontaktelementes der Schalteinrichtung aus Fig. 4a;
- Fig. 5a -: eine Seitenansicht eines Kontaktnietes;
- Fig. 5b -: eine Draufsicht auf die Kontaktfläche des Kontaktnietes aus Fig. 5a.

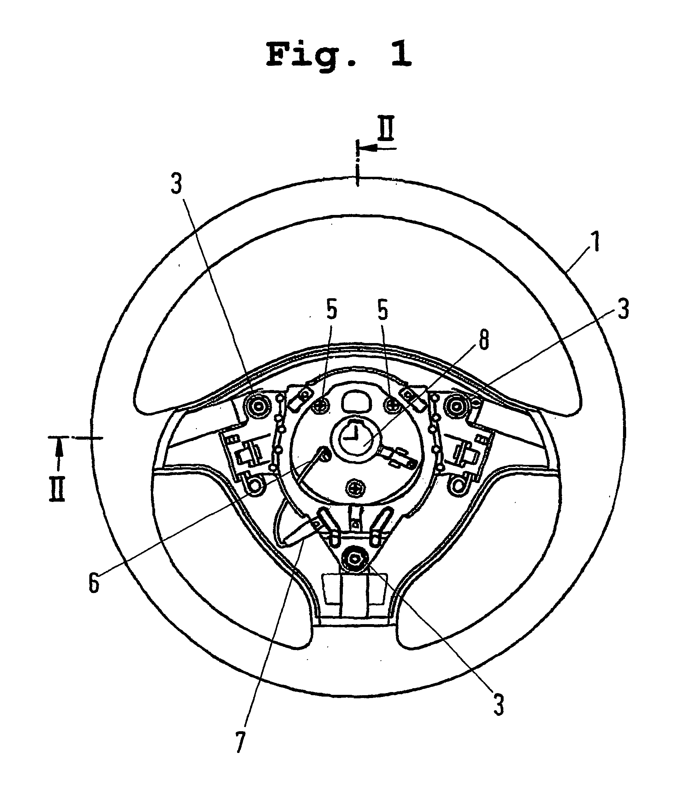

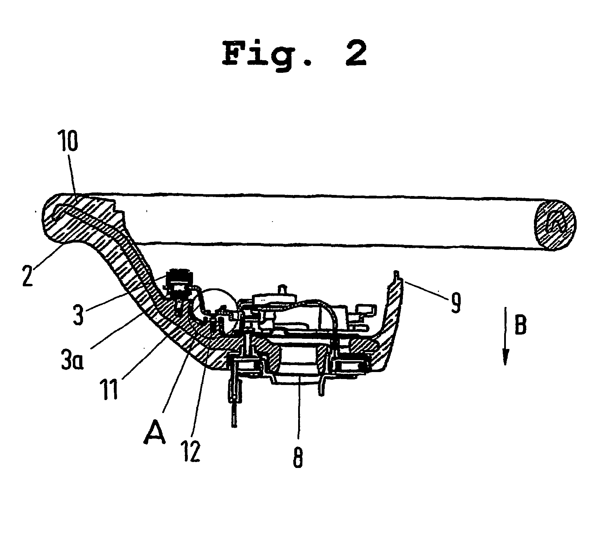

In den Figuren 1 und 2 ist ein drei Speichen aufweisendes Lenkrad 1 gezeigt, in dessen zentralem Bereich eine Mehrzahl mechanischer und elektrischer Baugruppen sichtbar ist, da das diesen Bereich überdeckende Airbagmodul nicht mit dargestellt ist.

Das Lenkrad 1 weist ein drehbares, auf einer Lenkradnabe 8 gelagertes Lenkradskelett 2 mit einer Ummantelung 10 auf, an dem über drei Befestigungsmittel in Form von Bundschrauben 3 ein Kontaktträger 11 befestigt ist. Auf den Bundschrauben 3 ist dabei jeweils ein elastisches Element in Form einer vorgespannten Schraubenfeder 3a gelagert, über die sich der Kontaktträger 11 unter Vorspannung federnd an dem Lenkradskelett 2 abstützt.

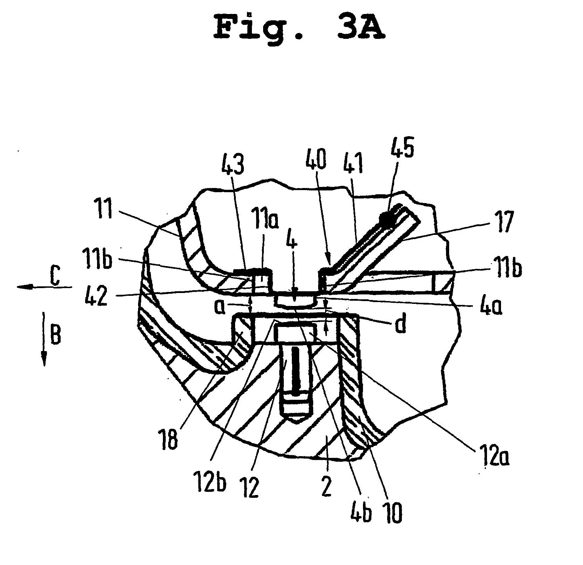

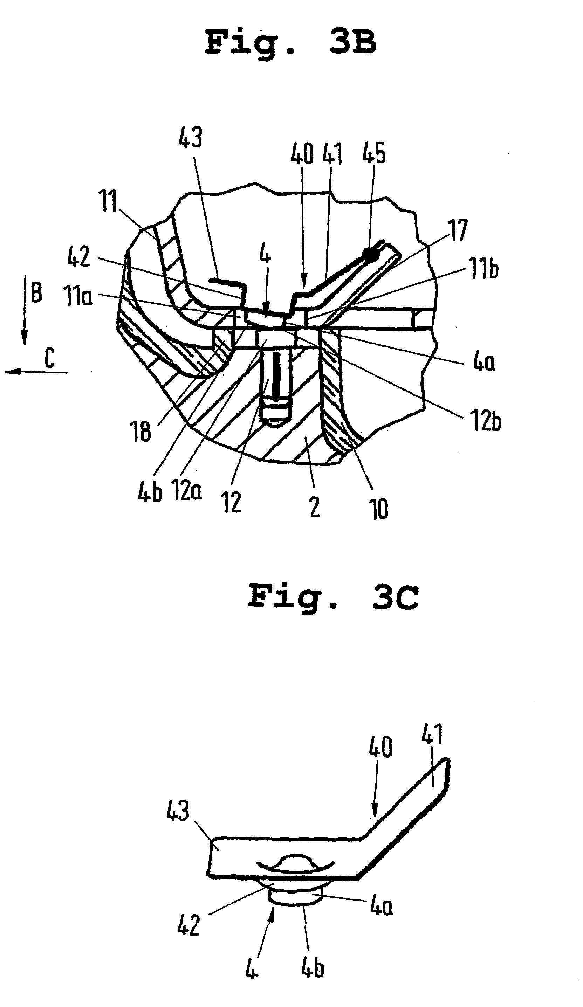

Neben den Bundschrauben 3 ist jeweils eine Schalteinrichtung 4, 12 angeordnet, die zur Betätigung eines Signalhornes des Kraftfahrzeugs dient und die weiter unten anhand der Figuren 3a - 3c beschrieben werden wird. Um diese Schalteinrichtung 4, 12 mit dem Signalhorn elektrisch verbinden zu können, ist üblicherweise eine (hier nicht dargestellte) Kontakteinheit vorgesehen, die der Übertragung elektrischer Signale zwischen zwei zueinander beweglichen Baugruppen eines Kraftfahrzeugs, nämlich dem Lenkrad einerseits und einer bezüglich des Lenkrades feststehenden Baugruppe andererseits, dient, vergl. z.B. DE 195 06 865 C1 und DE 195 25 928 C2, wo derartige Kontakteinheiten (Übertragungseinrichtungen) beschrieben sind. In Fig. 1 sind lediglich die Befestigungsschrauben 5 für die Kontakteinheit dargestellt.

In den Figuren 1 und 2 ist ferner ein elektrisches Kabel 6 mit einem Anschlußstecker 7 erkennbar, das der Zufuhr von Strom zu einer Airbageinheit dient, die auf hierfür vorgesehenen Lagerstellen 9 des Lenkrades in bekannter Weise derart federnd befestigt wird, daß sie parallel zur Lenkradnabe 8 bewegbar ist, wenn auf den zentralen Lenkradbereich (der durch eine Abdeckkappe des Airbagmodules gebildet wird) ein Druck ausgeübt wird. Hierdurch wird wiederum der Kontaktträger 11 parallel zur Erstreckungsrichtung B der Lenkradnabe 8 (in axialer Richtung) auf das Lenkradskelett 2 zu bewegt, wodurch die Kontaktelemente der Schalteinrichtung 4, 12 geschlossen werden, was nachfolgend anhand der Fig. 3a - 3c näher erläutert werden wird.

In Fig. 3a ist der in Fig. 2 durch einen Kreis A um die Schalteinrichtung 4, 12 herum vergrößert dargestellt.

Die Schalteinrichtung 4, 12 umfaßt zwei Kontaktelemente, von denen das eine Kontaktelement 4 federnd auf dem Kontaktträger 11 gelagert ist und das andere Kontaktelement 12 als Kontaktniet ausgebildet und an dem Lenkradskelett 2 befestigt ist. Das federnd gelagerte Kontaktelement 4 besteht aus einem zylindrischen Kontaktabschnitt 4a, der an einem auf dem Kontaktträger 11 gelagerten elastischen Element in Form einer Kontaktfeder 40 angeformt ist und eine Kontaktfläche 4b aufweist.

Die zur federnden Lagerung des Kontaktelementes 4 dienende Kontaktfeder 40 weist einen plattenförmigen Endabschnitt 43 auf, der auf dem Kontaktträger 11 aufliegt und mit einem hohlzylindrischen Fortsatz 42 durch eine Ausnehmung 11a des Kontaktträgers 11 hindurchragt, wobei der hohlzylindrische Abschnitt 42 an seinem freien Ende den Kontaktabschnitt 4a mit der Kontaktfläche 4b bildet. Von dem plattenförmigen Abschnitt 43 der Kontaktfeder 40 steht unter einem Winkel von etwa 45° ein Federschenkel 41 ab, der auf einem Stützelement aufliegt, das durch eine aus dem Kontaktträger herausgebogene Stützlasche 17 gebildet wird und das eine schiefe Ebene als Auflage für den Federschenkel 41 ausbildet. An einer Befestigungsstelle 45 ist der Federschenkel 41 dabei linienförmig (d.h. im Querschnitt punktförmig) an der Stützlasche 17 festgelegt.

Hinsichtlich des federnd gelagerten Kontaktelementes 4 sei noch besonders darauf hingewiesen, daß die Ausnehmung 11a in dem Kontaktträger 11 eine derartige Breite (Ausdehnung quer zur Bewegungsrichtung B entlang der die beiden Kontaktelemente 4, 12 miteinander in Kontakt bringbar sind), aufweist, daß sich der hohlzylindrische Abschnitt 42 des Federelementes 40 und damit auch das Kontaktelement 4 in dieser Ausnehmung 11a quer zur Bewegungsrichtung B verschieben lassen.

Das zweite, als Kontaktniet ausgebildete Kontaktelement 12 ist unmittelbar an dem Lenkradskelett 2 befestigt, wozu eine entsprechende Ausnehmung in der Umhüllung 10 des Lenkradskelettes 2 vorgesehen ist. Der als Kontaktabschnitt 12a dienende und mit einer Kontaktfläche 12b versehene Nietkopf des Kontaktnietes 12 ist dadurch von einem hohlzylindrischen Abschnitt 18 der Umhüllung 10 umgeben.

Der hohlzylindrische Abschnitt 18 der Umhüllung 10 sowie die seitlichen Ränder 11b der Ausnehmung 11a des Kontaktelementes 11 sind derart einander gegenüberliegend angeordnet, daß sie die Bewegung des Kontaktträgers 11 relativ zu dem Lenkradskelett 2 entlang der zum Schließen der Schalteinrichtung 4, 12 vorgesehenen Bewegungsrichtung B begrenzen. Hierdurch wird die Kontaktkraft begrenzt, die das federnd gelagerte Kontaktelement 4 beim Schließen der Schalteinrichtung 4, 12 auf das als Nietkontakt ausgebildete Kontaktelement 12 ausüben kann. Der Abstand a zwischen den beiden Anschlägen 11b, 18 ist dabei so gewählt, daß er größer ist als die Distanz d zwischen den beiden Kontaktflächen 4b, 12b entlang der Bewegungsrichtung B. Hierdurch ist sichergestellt, daß die beiden Anschläge 11b, 18 erst dann miteinander in Wirkverbindung treten, um eine weitere Bewegung der Kontaktelemente 4, 12 zu verhindern, nachdem diese beiden in Kontakt getreten sind.

Die Distanz d zwischen den beiden Kontaktflächen 4b, 12b ist dadurch präzise und reproduzierbar festgelegt, daß sich das zur Aufnahme des ersten Kontaktelementes 4 vorgesehene Federelement 40 unter Vorspannung an dem Kontaktträger 11 bzw. dessen Stützlasche 17 abstützt.

Wie oben erwähnt, ist der Kontaktträger 11 elektrisch leitend ausgebildet und über einen elektrischen Anschluß auf ein positives Potential gelegt, das somit auch dem Potential des ersten, federnd gelagerten Kontaktelementes 4 entspricht. Das andere, unmittelbar am Lenkradskelett 2 befestigte Kontaktelement 12 liegt demgegenüber auf einem negativen Potential. Wird der Kontakt geschlossen, treten also die beiden Kontaktelemente 4, 12 miteinander in Verbindung, so entsteht ein Strom, der z.B. ein Relais oder ein Elektronikmodul ansteuert und dadurch die Auslösung des Signalhornes des Kraftfahrzeugs oder einer anderen elektrisch betätigbare Baugruppe auslöst.

Fig. 3b zeigt die Schalteinrichtung aus Fig. 3a nach dem Schließen des Kontaktes, wobei bereits die beiden Anschläge 11b, 18 miteinander in Anschlag geraten sind.

Da die Distanz d zwischen den Kontaktflächen 4, 12b der beiden Kontaktelemente 4, 12 in Bewegungsrichtung B kleiner ist als der Abstand a der beiden Anschläge 11b, 18, treten zunächst die beiden Kontaktflächen 4b, 12b miteinander in Kontakt, wenn der Kontaktträger 12 zusammen mit dem federnd gelagerten Kontaktelement 4 zu dem an dem Lenkradskelett 2 befestigten Kontaktelement 12 hin bewegt wird.

Aufgrund der federnden Lagerung des am Kontaktträger 11 über ein Federelement 40 befestigten Kontaktelementes 4 endet die Relativbewegung der beiden Kontaktelemente 4, 12 nicht abrupt bereits dann, wenn diese mit ihren Kontaktflächen 4b, 12b in Kontakt geraten. Vielmehr erfolgt zunächst eine Relativbewegung senkrecht zur Bewegungsrichtung B, während der der federnd gelagerte Kontakt 4 mit seiner Kontaktfläche 4b entlang der Kontaktfläche 12 b des unmittelbar am Lenkradskelett befestigten Kontaktes 12 gleitet. Hierdurch werden die Kontaktflächen 4b, 12b gereinigt, insbesondere von Schmutz bzw. einer Oxidationsschicht befreit. Diese Relativbewegung, bei der der über eine im Querschnitt punktförmige Befestigungsstelle an der Stützlasche 17 befestigte und als Hebel wirkende Schenkel 41 eine Schwenkbewegung ausführt, endet erst dann, wenn die beiden Anschläge 11b des Kontaktträgers 11 einerseits und 18 der Umhüllung 10 des Lenkradskelettes 2 andererseits miteinander in Anschlag geraten sind. Das Ausmaß der Relativbewegung der beiden Kontaktflächen 4b, 12b senkrecht zur Bewegungsrichtung B wird dabei u.a. durch den Winkel des Schenkels 41 bezüglich der Bewegungsrichtung B bzw. bezüglich der Kontaktfläche 4b (d.h. bezüglich der Senkrechten zur Bewegungsrichtung B) bestimmt. Im Ausführungsbeispiel gemäß der Fig. 3a und 3b betragen beide Winkel 45°. Wird der Winkel des Schenkels 41 zur Bewegungsrichtung B kleiner als 45° gewählt (und damit der Winkel des Schenkels 41 zur Kontaktfläche 4b größer als 45°), kann das Ausmaß der Bewegung des federnd gelagerten Kontaktelementes 4 senkrecht zu der Richtung B erhöht werden.

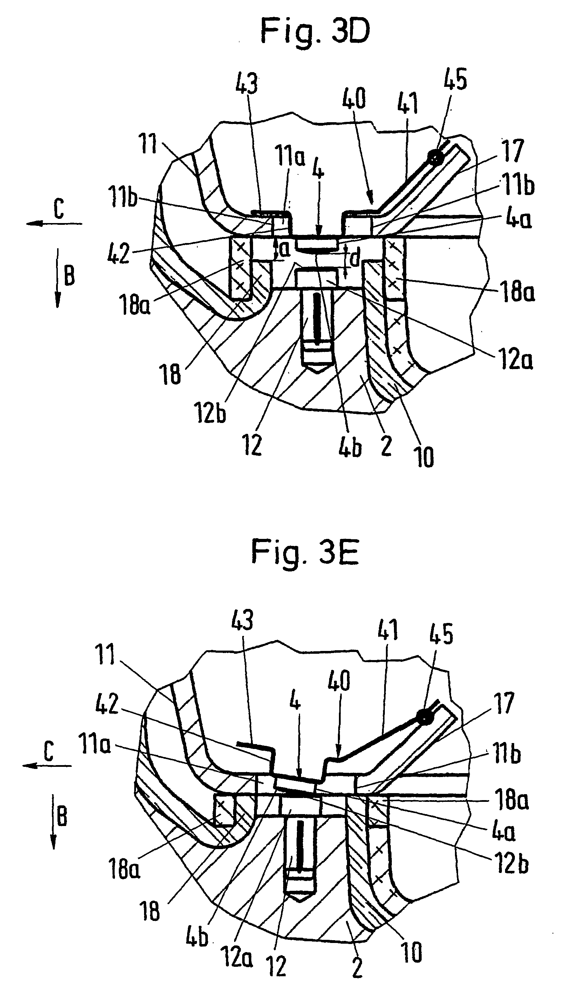

In den Figuren 3d und 3e ist eine Weiterbildung des Ausführungsbeispiels aus den Figuren 3a und 3b dargestellt, wonach die Schalteinrichtung 4, 12 zum Schutz vor Staub und dergl. zusätlich von einem elastisch deformierbären Hohlkörper in Form eines hohlzylindrischen offenzelligen Schaumkörpers 18a (z.B. aus Moltopren) umgeben ist, der sich einerseits an dem Kontaktträger 11 und andererseits an dem Lenkradskelett 2 bzw. dessen Umhülllung 10 abstützt und der beim Schließen der Schalteinrichtung 4, 12 komprimiert wird. Die offenen Zellen ermöglichen dabei einen Luftaustausch.

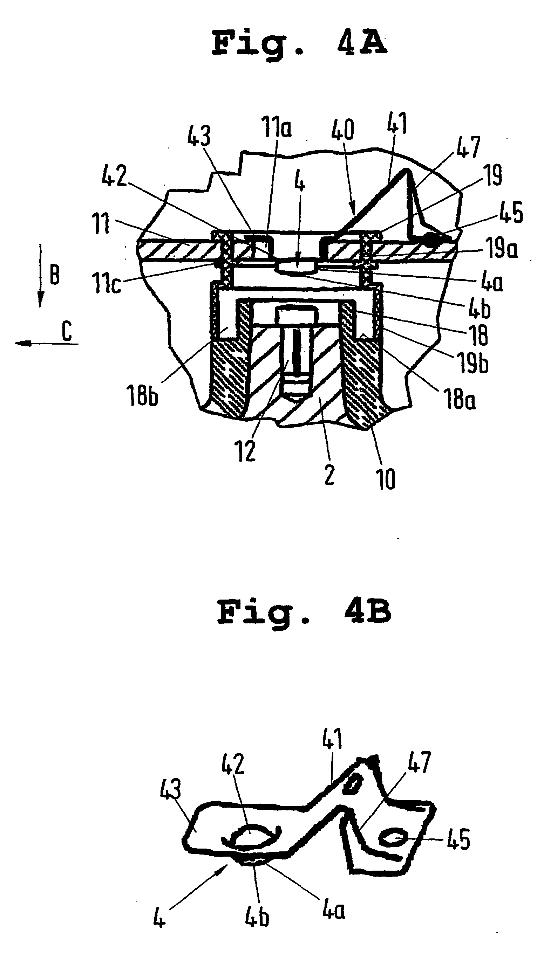

In den Figuren 4a und 4b ist eine Abwandlung des Ausführungsbeispiels aus den Figuren 3a und 3b dargestellt, die sich in zweierlei Hinsicht von diesem Ausführungsbeispiel unterscheidet.

Zum einen ist das Stützelement 47, über das sich ein Schenkel 41 der Kontaktfeder 40 an dem Kontaktträger 11 abstützt, in diesem Fall einstückig an der Kontaktfeder 40 angeformt und über eine im Querschnitt punktförmige Befestigungsstelle 45 mit dem Kontaktträger verbunden. Das Stützelement 47 wird dabei durch einen an einem Ende von dem Schenkel 41 abgewinkelten Abschnitt gebildet, der sich von dem besagten Ende des Schenkels 41 zu dem Kontaktträger 11 hin erstreckt und sich entlang dieser Richtung verbreitert. Im Übergangsbereich von Schenkel 41 und Stützelement 47 ist dabei ein Entlastungsschlitz vorgesehen.

Zum anderen ist bei dem Ausführungsbeispiel gemäß den Figuren 4a und 4b eine domförmige Hülle 19 in Form eines an dem Kontaktträger 11 angespritzen Elastomeres vorgesehen, die die Schalteinrichtung 4, 12 umgibt und dadurch vor Verschmutzung sichert. Die domförmige Hülle 19 besteht aus zwei im wesentlichen hohlzylindrischen Abschnitten 19a, 19b, die einstückig miteinander verbunden sind und von denen der eine hohlzylindrische Abschnitt 19a in zugeordneten Bohrungen 11c des Kontaktträgers 11 festgelegt ist und der andere Abschnitt 19b sich an einer Schulter 18a der Lenkradumhüllung 18 abstützt. Dabei erstreckt sich zwischen der Lenkradumhüllung 18 im Bereich der Schulter 18a und dem zweiten Abschnitt 19b der domförmigen Hülle 19 ein Kanal 18b im wesentlichen parallel zur Bewegungsrichtung B, in dem der erste hohlzylindrische Abschnitt 19a der domförmigen Hülle 19 gleiten kann. Hierdurch sowie aufgrund der Elastzität des Materials der domförmigen Hülle 19 sind die beiden Abschnitte 19a, 19b der domförmigen Hülle 19 sowohl zueinander beweglich als auch defomierbar und ermöglichen eine Bewegung der beiden Kontaktelemente 4, 12 relativ zueinander entlang der Richtung B, um einen Kontakt herzustellen.

Im übrigen stimmt das in den Figuren 4a und 4b dargestellte Ausführungsbeispiel mit dem in den Figuren 3a - 3c gezeigten überein, so daß diesbezüglich auf die dortigen Erläuterungen Bezug genommen wird.

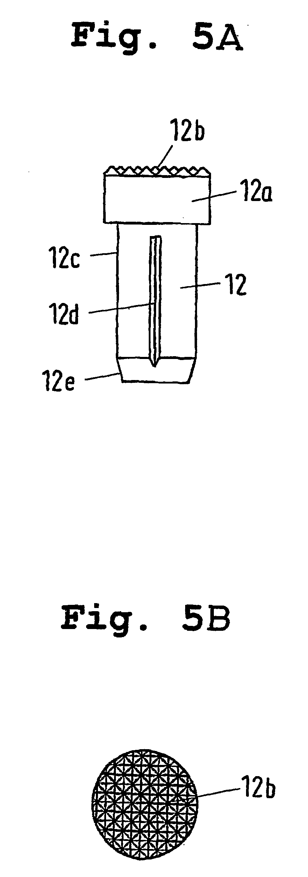

In den Figuren 5a und 5b ist schließlich noch ein Ausführungsbeispiel eines Kontaktelementes in Form eines Kontaktnietes 12 dargestellt, dessen Nietkopf einen Kontaktabschnitt 12a mit einer Kontaktoberfläche 12b bildet. Die Kontaktoberfläche 12b ist aufgerauht, um die Reinigungswirkung zu verbessern, die auftritt, wenn sich die Kontaktfläche des einen Kontaktelementes entlang der Kontaktfläche des anderen Kontaktelementes bewegt. Die aufgerauhte Oberflächenstruktur der Kontaktfläche 12b kann dabei z.B. durch Prägen oder Schmirgeln erzeugt werden.

Der Kontaktniet 12 weist in seinem Schaft 12c ferner eine sich in Längsrichtung erstreckende Nut 12d auf, und der Schaft 12c schließt an seinem unteren, dem Nietkopf 12a abgewandten Ende mit einem sich konisch verjüngenden Bereich 12e ab.

Durch diese Anordnung der Anschläge 12b, 18 kann der Kontaktträger noch entlang der Bewegungsrichtung B (axiale Richtung) weiter bewegt werden, wenn die beiden Kontaktelemente 4, 12 mit ihren Kontaktflächen 4b, 12b bereits in Konakt stehen.

Bei den beiden vorstehend beschriebenen Ausführungsbeispielen war der federnd gelagerte Kontakt jeweils an einem beweglichen, federnd gegenüber dem Lenkradskelett vorgespannten Kontaktträger und der andere Kontakt unmittelbar am Lenkradskelett selbst befestigt. Selbstverständlich ist auch die umgekehrte Anordnung möglich.

## Patentansprüche

1. Lenkrad für Kraftfahrzeuge mit mindestens einer Schalteinrichtung zum Betätigen einer elektrischen Funktionsgruppe eines Kraftfahrzeugs, wobei die Schalteinrichtung zwei zueinander bewegliche elektrische Kontaktelemente (4, 12) umfaßt, die zur Betätigung der Funktionsgruppe miteinander in Kontakt bringbar sind,
**dadurch gekennzeichnet,**
**daß** eines der Kontaktelemente (4) derart federnd gelagert ist, daß es entlang des anderen Kontaktelementes (12) gleitet, nachdem die beiden Kontaktelemente (4, 12) zum Betätigen der elektrischen Funktionsgruppe miteinander in Kontakt gebracht worden sind, wobei die beiden Kontaktelemente (4, 12) an zwei zur Herstellung des Kontaktes zwischen den Kontaktelementen (4, 12) zueinander beweglichen tragenden Baugruppen (2, 11) des Lenkrades (1) befestigt sind und das eine Kontaktelement (4) über ein elastisches Element (40) mit der zugehörigen tragenden Baugruppe (11) verbunden ist.

2. Lenkrad nach Anspruch 1, **dadurch gekennzeichnet, daß** die beiden Kontaktelemente (4, 12) entlang einer ersten Richtung (B) aufeinander zu bewegbar sind, bis sie miteinander in Kontakt treten und daß anschließend das federnd gelagerte Kontaktelement (4) entlang einer zweiten Richtung (C) ausweicht und dabei über das andere Kontaktelement (12) gleitet.

3. Lenkrad nach Anspruch 2, **dadurch gekennzeichnet, daß** die zweite Richtung (C) im wesentlichen senkrecht zur ersten Richtung (B) verläuft.

4. Lenkrad nach Anspruch 2 oder 3, **dadurch gekennzeichnet, daß** die beiden Kontaktelemente (4, 12) jeweils Kontaktflächen (4b, 12b) aufweisen, die sich im wesentlichen senkrecht zu der ersten Richtung (B) erstrecken und die miteinander in Kontakt bringbar sind.

5. Lenkrad nach einem der Ansprüche 1 bis 4, **dadurch gekennzeichnet, daß** eine der Baugruppen durch das Lenkradskelett (2) gebildet wird und daß die andere Baugruppe (11) beweglich an dem Lenkradskelett (2) gelagert ist.

6. Lenkrad nach Anspruch 5, **dadurch gekennzeichnet, daß** die beweglich bezüglich des Lenkradskelettes (2) gelagerte Baugrupppe (11) entgegen der zur Herstellung eines Kontaktes zwischen den beiden Kontaktelementen (4, 12) dienenden ersten Bewegungsrichtung (B) elastisch vorgespannt ist.

7. Lenkrad nach Anspruch 6, **dadurch gekennzeichnet, daß** die beweglich bezüglich des Lenkradskelettes (2) gelagerte Baugruppe (11) durch Ausübung eines Druckes auf den zentralen Lenkradbereich zur Herstellung des Kontaktes zwischen den beiden Kontaktelementen (4, 12) bewegbar ist.

8. Lenkrad nach einem der Ansprüche 5 bis 7, **dadurch gekennzeichnet, daß** die beweglich bezüglich des Lenkradskelettes (2) gelagerte Baugruppe (11) einen Kontaktträger (11) umfaßt, der in axialer Richtung bezüglich des Lenkradskelettes beweglich ist.

9. Lenkrad nach einem der Ansprüche 1 bis 8, **dadurch gekennzeichnet, daß** das Kontaktelement (4) einstückig an dem elastischen Element (40) angeformt ist.

10. Lenkrad nach einem der Ansprüche 1 bis 9, **dadurch gekennzeichnet, daß** das elastische Element (40) einen Schenkel (41) aufweist, der in einem spitzen Winkel zu der ersten Richtung (B) verläuft, entlang der die beiden Kontaktelemente (4, 12) miteinander in Kontakt bringbar sind.

11. Lenkrad nach Anspruch 10, **dadurch gekennzeichnet, daß** an einem Ende des Schenkels (41) das Kontaktelement (4) vorgesehen ist und daß das andere Ende des Schenkels (41) bezüglich der tragenden Baugruppe (11) festgelegt ist.

12. Lenkrad nach Anspruch 10 oder 11, **dadurch gekennzeichnet, daß** sich der Schenkel (41) an einem Stützelement (17, 47) der zugehörigen tragenden Baugruppe (11) abstützt.

13. Lenkrad nach Anspruch 12, **dadurch gekennzeichnet, daß** das Stützelement (47) einstückig an dem Schenkel (41) angeformt ist.

14. Lenkrad nach einem der vorhergehenden Ansprüche, **dadurch gekennzeichnet, daß** das elastische Element (40) schwenkbar gelagert ist.

15. Lenkrad nach einem der Ansprüche 10 bis 13 und Anspruch 14, **dadurch gekennzeichnet, daß** der Schenkel (41) des elastischen Elementes (40) schwenkbar gelagert ist.

16. Lenkrad nach einem der Ansprüche 1 bis 15, **dadurch gekennzeichnet, daß** das elastische Element (40) unter Vorspannung steht.

17. Lenkrad nach einem der vorhergehenden Ansprüche, **dadurch gekennzeichnet, daß** Anschläge (11b, 18) vorgesehen sind, die zusammenwirken, um die Bewegung der beiden Kontaktelemente (4, 12) zueinander zu begrenzen und dadurch die Kraft begrenzen, die die beiden Kontaktelemente (4, 12) aufeinander ausüben.

18. Lenkrad nach Anspruch 17, **dadurch gekennzeichnet, daß** der Abstand (d) der beiden Kontaktelemente (4, 12) entlang der ersten Richtung (B), entlang der die beiden Kontaktelemente (4, 12) miteinander in Kontakt bringbar sind, kleiner ist als der Abstand (a) der beiden Anschläge (11b, 18) entlang dieser Richtung (B).

19. Lenkrad nach einem der Ansprüche 1 bis 18, **dadurch gekennzeichnet, daß** das federnd gelagerte Kontaktelement (4) an der beweglichen, tragenden Baugruppe (11) des Lenkrades (1) befestigt ist.

20. Lenkrad nach einem der Ansprüche 8 bis 19, **dadurch gekennzeichnet, daß** der Kontaktträger (11) aus einem elektrisch leitenden Material besteht und einstückig mit einem elektrischen Anschlußelement verbunden ist.

21. Lenkrad nach einem der vorhergehenden Ansprüche, **dadurch gekennzeichnet, daß** eine Hülle (18a, 19) vorgesehen ist, die die Schalteinrichtung (4, 12) umgibt, um sie vor Verschmutzung zu schützen.

22. Lenkrad nach Anspruch 21, **dadurch gekennzeichnet, daß** die Hülle (19) aus zwei entlang der ersten Richtung (B), entlang der die beiden Kontaktelemente (4, 12) miteinander in Kontakt bringbar sind, zueinander beweglichen Abschnitten (19a, 19b) besteht.

23. Lenkrad nach Anspruch 21, **dadurch gekennzeichnet, daß** die Hülle (18a) aus einem entlang der ersten Richtung (B), entlang der die beiden Kontaktelemente. (4, 12) miteinander in Kontakt bringbar sind, deformierbaren Hohlkörper besteht.

24. Lenkrad nach einem der vorhergehenden Ansprüche, **dadurch gekennzeichnet, daß** eines der Kontaktelemente (12) eine aufgerauhte Oberflächenstruktur (12b) aufweist, die als Kontaktfläche dient.

25. Lenkrad nach einem der vorhergehenden Ansprüche, **dadurch gekennzeichnet, daß** eines der Kontaktelemente (4) plattenförmig ausgebildet ist oder an einem plattenförmigen Abschnitt angeformt ist und daß dieser Abschnitt Versteifungsrippen und/oder Ausnehmungen aufweist.

26. Lenkrad nach einem der vorhergehenden Ansprüche, **dadurch gekennzeichnet, daß** als Material für die Kontaktelemente (4, 12) eine Silberlegierung oder Messing verwendet wird.

## Claims

1. Steering wheel for motor vehicles, said steering wheel comprising at least one switching device for actuating an electric functional group of a motor vehicle, the switching device comprising two electric contact elements (4, 12) which are moveable relative to one another and which can be brought into contact with one another in order to actuate the functional group, **characterized in that** one of the contact elements (4) is mounted resiliently in such a way that it slides along the other contact element (12), after the two contact elements (4, 12) have been brought into contact with one another in order to actuate the electric functional group, the two contact elements (4, 12) being fastened to two carrying subassemblies (2, 11) of the steering wheel (1) which are moveable relative to one another in order to make contact between the contact elements (4, 12), and one contact element (4) being connected to the associated carrying subassembly (11), via an elastic element (40).

2. Steering wheel according to Claim 1, **characterized in that** the two contact elements (4, 12) can be moved towards one another along a first direction (B) until they come into contact with one another and **in that**, subsequently, the resiliently mounted contact element (4) yields along a second direction (C) and at the same time slides over the other contact element (12).

3. Steering wheel according to Claim 2, **characterized in that** the second direction (C) runs essentially perpendicularly to the first direction (B).

4. Steering wheel according to Claim 2 or 3, **characterized in that** the two contact elements (4, 12) in each case have contact faces (4b, 12b) which extend essentially perpendicularly to the first direction (B) and which can be brought into contact with one another.

5. Steering wheel according to Claims 1 to 4, **characterized in that** one of the subassemblies is formed by the steering wheel skeleton (2), and **in that** the other subassembly (11) is mounted moveably on the steering wheel skeleton (2).

6. Steering wheel according to Claim 5, **characterized in that** the subassembly (11) mounted moveably with respect to the steering wheel skeleton (2) is prestressed elastically opposite to the first direction of movement (B) serving for making contact between the two contact elements (4, 12).

7. Steering wheel according to Claim 6, **characterized in that** the subassembly (11) mounted moveably with respect to the steering wheel skeleton (2) can be moved by a pressure being exerted on the central steering wheel region in order to make contact between the two contact elements (4, 12).

8. Steering wheel according to one of Claims 5 to 7, **characterized in that** the subassembly (11) mounted moveably with respect to the steering wheel skeleton (2) comprises a contact carrier (11) which is moveable in the axial direction with respect to the steering wheel skeleton.

9. Steering wheel according to one of Claims 1 to 8, **characterized in that** the contact element (4) is integrally formed in one piece on the elastic element (40).

10. Steering wheel according to one of Claims 1 to 9, **characterized in that** the elastic element (40) has a limb (41) which runs at an acute angle to the first direction (B) along which the two contact elements (4, 12) can be brought into contact with one another.

11. Steering wheel according to Claim 10, **characterized in that** the contact element (4) is provided at one end of the limb (41), and **in that** the other end of the limb (41) is secured with respect to the carrying subassembly (11).

12. Steering wheel according to Claim 10 or 11, **characterized in that** the limb (41) is supported on a supporting element (17, 47) of the associated carrying subassembly (11).

13. Steering wheel according to Claim 12, **characterized in that** the supporting element (47) is integrally formed in one piece on the limb (41).

14. Steering wheel according to one of the preceding claims, **characterized in that** the elastic element (40) is mounted pivotably.

15. Steering wheel according to one of Claims 10 to 13 and Claim 14, **characterized in that** the limb (41) of the elastic element (40) is mounted pivotably.

16. Steering wheel according to one of Claims 11 to 15, **characterized in that** the elastic element (40) is under prestress.

17. Steering wheel according to one of the preceding claims, **characterized in that** stops (11b, 18) are provided which cooperate in order to limit the movement of the two contact elements (4, 12) relative to one another and thereby limit the force which the two contact elements (4, 12) exert on one another.

18. Steering wheel according to Claim 17, **characterized in that** the distance (d) between the two contact elements (4, 12) along the first direction (B) along which the two contact elements (4, 12) can be brought into contact with one another is smaller than the distance (a) between the two stops (11b, 18) along this direction (B).

19. Steering wheel according to one of Claims 1 to 18, **characterized in that** the resiliently mounted contact element (4) is fastened to the moveable carrying subassembly (11) of the steering wheel (1).

20. Steering wheel according to one of Claims 8 to 19, **characterized in that** the contact carrier (11) consists of an electrically conducting material and is connected in one piece to an electric junction element.

21. Steering wheel according to one of the preceding claims, **characterized in that** a sheath (18a, 19) is provided, which surrounds the switching device (4, 12) in order to protect the latter against contamination.

22. Steering wheel according to Claim 21, **characterized in that** the sheath (19) consists of two portions (19a, 19b) moveable relative to one another along the first direction (B) along which the two contact elements (4, 12) can be brought into contact with one another.

23. Steering wheel according to Claim 21, **characterized in that** the sheath (18a) consists of a hollow body deformable along the first direction (B) along which the two contact elements (4, 12) can be brought into contact with one another.

24. Steering wheel according to one of the preceding claims, **characterized in that** one of the contact elements (12) has a roughened surface structure (12b) which serves as a contact face.

25. Steering wheel according to one of the preceding claims, **characterized in that** one of the contact elements (4) is of plate-shaped design or is integrally formed on a plate-shaped portion, and **in that** this portion has stiffening ribs and/or recesses.

26. Steering wheel according to one of the preceding claims, **characterized in that** the material used for the contact elements (4, 12) is a silver alloy or brass.

## Revendications

1. Volant pour véhicules automobiles pourvu d'au moins un dispositif de commutation pour actionner un groupe fonctionnel électrique d'un véhicule automobile, le dispositif de commutation comprenant deux éléments de contact (4, 12) électriques mobiles l'un par rapport à l'autre, qui peuvent être amenés en contact l'un avec l'autre pour l'actionnement du groupe fonctionnel,
**caractérisé en ce que**
l'un des éléments de contact (4) est monté sur ressort de telle sorte qu'il glisse le long de l'autre élément de contact (12) une fois que les deux éléments de contact (4, 12) ont été amenés en contact l'un avec l'autre pour l'actionnement du groupe fonctionnel électrique, les deux éléments de contact (4, 12) étant fixés sur deux ensembles (2, 11) du volant (1) porteurs et mobiles l'un par rapport à l'autre pour l'établissement du contact entre les éléments de contact (4, 12), et un élément de contact (4) étant relié par un élément (40) élastique au groupe (11) porteur correspondant.

2. Volant selon la revendication 1, **caractérisé en ce que** les deux éléments de contact (4, 12) peuvent être déplacés l'un vers l'autre le long d'une première direction (B) jusqu'à ce qu'ils soient en contact l'un avec l'autre et qu'ensuite l'élément de contact (4) monté sur ressort dévie le long d'une seconde direction (C) et glisse alors sur l'autre élément de contact (12).

3. Volant selon la revendication 2, **caractérisé en ce que** la seconde direction (C) est sensiblement perpendiculaire à la première direction (B).

4. Volant selon la revendication 2 ou 3, **caractérisé en ce que** les deux éléments de contact (4, 12) présentent respectivement des surfaces de contact (4b, 12b) qui s'étendent sensiblement perpendiculairement à la première direction (B) et peuvent être amenés en contact l'un avec l'autre.

5. Volant selon l'une des revendications 1 à 4, **caractérisé en ce que** l'un des ensembles est formé par l'ossature du volant (2) et **en ce que** l'autre ensemble (11) est logé de façon mobile sur l'ossature de volant (2).

6. Volant selon la revendication 5, **caractérisé en ce que** l'ensemble (11) logé de façon mobile par rapport à l'ossature de volant (2) est pré-tendu de façon élastique dans le sens contraire à la première direction de déplacement (B) servant à l'établissement d'un contact entre les deux éléments de contact (4, 12).

7. Volant selon la revendication 6, **caractérisé en ce que** l'ensemble (11) logé de façon mobile par rapport à l'ossature du volant (2) peut être déplacé par l'exercice d'une pression sur la zone centrale du volant pour l'établissement du contact entre les deux éléments de contact (4, 12).

8. Volant selon l'une des revendications 5 à 7, **caractérisé en ce que** l'ensemble (11) logé de façon mobile par rapport à l'ossature du volant (2) comprend un support de contact (11) qui est mobile dans la direction axiale par rapport à l'ossature du volant.

9. Volant selon l'une des revendications 1 à 8, **caractérisé en ce que** l'élément de contact (4) est formé d'une seule pièce sur l'élément (40) élastique.

10. Volant selon l'une des revendications 1 à 9, **caractérisé en ce que** l'élément élastique (40) présente une branche (41) qui est disposée dans un angle aigu par rapport à la première direction (B), le long de laquelle les deux éléments de contact (4, 12) peuvent être amenés en contact l'un avec l'autre.

11. Volant selon la revendication 10, **caractérisé en ce que** l'élément de contact (4) est prévu sur une extrémité de la branche (41) et l'autre extrémité de la branche (41) est fixée par rapport à l'ensemble (11) porteur.

12. Volant selon la revendication 10 ou 11, **caractérisé en ce que** la branche (41) s'appuie sur un élément de soutien (17, 47) de l'ensemble (11) porteur spécifique.

13. Volant selon la revendication 12, **caractérisé en ce que** l'élément de soutien (47) est formé d'une seule pièce sur la branche (41).

14. Volant selon l'une des revendications précédentes, **caractérisé en ce que** l'élément élastique (40) est logé de façon pivotante.

15. Volant selon l'une des revendications 10 à 13 et la revendication 14, **caractérisé en ce que** la branche (41) de l'élément élastique (40) est logée de façon pivotante.

16. Volant selon l'une des revendications 1 à 15, **caractérisé en ce que** l'élément élastique (40) est sous prétension.

17. Volant selon l'une des revendications précédentes, **caractérisé en ce qu'**il est prévu des butées (11b, 18) qui coopèrent afin de limiter le déplacement des deux éléments de contact (4, 12) l'un par rapport à l'autre et limiter ainsi la force que les deux éléments de contact (4, 12) exercent l'un sur l'autre.

18. Volant selon la revendication 17, **caractérisé en ce que** l'espacement (d) des deux éléments de contact (4, 12) le long de la première direction (B), le long de laquelle les deux éléments de contact (4, 12) peuvent être amenés en contact l'un avec l'autre, est inférieur à l'espacement (a) des deux butées (11b, 18) le long de cette direction (B).

19. Volant selon l'une des revendications 1 à 18, **caractérisé en ce que** l'élément de contact (4) monté sur ressort est fixé sur l'ensemble (11) porteur et mobile du volant (1).

20. Volant selon l'une des revendications 8 à 19, **caractérisé en ce que** le porte-contact (11) est à base d'un matériau électroconducteur et est relié d'une seule pièce à un élément de raccordement électrique.

21. Volant selon l'une des revendications précédentes, **caractérisé en ce qu'**il est prévu une douille (18a, 19) qui entoure le dispositif de commutation (4, 12) afin de le protéger de l'encrassement.

22. Volant selon la revendication 21, **caractérisé en ce que** la douille (19) comprend deux parties (19a, 19b) pouvant être déplacées l'un par rapport à l'autre le long de la première direction (B), le long de laquelle les deux éléments de contact (4, 12) peuvent être amenés en contact l'un avec l'autre.

23. Volant selon la revendication 21, **caractérisé en ce que** la douille (18a) comprend un corps creux pouvant être déformé le long de la première direction (B), le long de laquelle les deux éléments de contact (4, 12) peuvent être amenés en contact l'un avec l'autre.

24. Volant selon l'une des revendications précédentes, **caractérisé en ce que** l'un des éléments de contact (12) présente une structure superficielle rendue rugueuse (12b) qui sert de surface de contact.

25. Volant selon l'une des revendications précédentes, **caractérisé en ce que** l'un des éléments de contact (4) est conçu en forme de plaque ou est formé sur une partie en forme de plaque et **en ce que** cette partie présente des nervures de renfort et/ou des évidements.

26. Volant selon l'une des revendications précédentes, **caractérisé en ce qu'**un alliage d'argent ou du laiton est utilisé comme matériau pour les éléments de contact (4, 12).
